# EUROPEAN PATENT APPLICATION

(11) **EP 4 161 133 A1**
(43) Date of publication of application: **05.04.2023**
(21) Application number: 21818656.7
(22) Date of filing: 20.05.2021
(51) Int. Cl.: H04W 24/04

(54) **TIME DELAY COMPENSATION METHOD AND BASE STATION**

(30) Priority: 01.06.2020 CN 202010485669
(71) Applicant: ZTE Corporation, Shenzhen, Guangdong 518057 (CN)
(72) Inventor: ZHOU, Heng, Shenzhen, Guangdong 518057 (CN)
(74) Representative: Aipex B.V.
(86) International application number: PCT/CN2021/094922
(87) International publication number: WO 2021/244301

(57) **Abstract**

Provided in the embodiments of the present application are a time delay compensation method and a base station. The base station comprises an annular network composed of a base band unit (BBU), two interface modules, and a plurality of radio remote units (RRUs). The method comprises: each interface module sends a routing refresh message to the BBU in response to determining that the link-up state of any one RRU has changed, wherein the routing refresh message carries identity identifiers of the plurality of RRUs; the BBU determines a target RRU on the basis of the identity identifiers of the plurality of RRUs; the BBU determines the reverse time delay of the target RRU on the basis of pre-stored identity identifiers of the plurality of RRUs and the correspondence between forward time delay and reverse time delay, and sends the reverse time delay to the target RRU; and the RRU performs time delay compensation on the basis of the reverse time delay.

## Description

### TECHNICAL FIELD

The present application relates to the field of wireless communications and, for example, to a time delay compensation method and a base station.

### BACKGROUND

A distributed architecture of a wireless communication system generally refers to a networking structure distributed by a base band unit (BBU) and a radio remote unit (RRU), and the RRU and the BBU are connected through an optical fiber.

Ring networking is a common network disaster tolerance networking mode. In a ring networking mode, one or more RRU are linked across different interface templates of the same BBU or different optical interfaces of the same interface module, so that the RRU can re-establish the session from the other direction and recover the network service when the communication failure occurs in one direction.

In an ideal condition, fast self-healing of the ring networking should reach the state of "service interruption unaware". In practical application, RRU re-establishment link, route re-refreshing, service parameter re-configuration re-transmission, and time delay re-measurement re-reporting, which may occur in the self-healing process, may increase the self-healing time and affect user experience.

### SUMMARY

The following is a summary of the subject matter described herein in detail. The summary is not intended to limit the scope of the claims.

The present application provides a method and a base station for compensating time delay to reduce the processing time consumed by fault recovery, and achieve the rapid self-healing of networking.

In a first aspect, an embodiment of the present application provides a time delay compensation method. The method includes the following.

An interface module sends a routing refresh message to the BBU in a case where a link establish state of any one RRU is determined to be changed, where the routing refresh message carries RRU identities.

The BBU determines a target RRU based on the RRU identities.

The BBU determines a reverse time delay of the target RRU based on a pre-stored correspondence relationship among the RRU identities and forward and reverse time delays, and sends the reverse time delay to the target RRU.

The target RRU performs time delay compensation based on the reverse time delay.

In a second aspect, an embodiment of the present application provides a base station, including two interface modules, a plurality of RRUs, and a BBU.

Two interface modules send a routing refresh message to the BBU in a case of determining that a link establish state of any one RRU has changed, where the routing refresh message carries RRU identities.

The BBU determines a target RRU based on the RRU identities.

The BBU determines a reverse time delay of the target RRU based on a pre-stored correspondence relationship among the RRU identities and forward and reverse time delays, and sends the reverse time delay to the target RRU. The target RRU performs time delay compensation based on the reverse time delay.

The preceding embodiments and other aspects of the present application and implementations thereof are described in more detail in the brief description of drawings, detailed description, and claims.

### BRIEF DESCRIPTION OF DRAWINGS

FIG. 1 is a structural diagram of a networking system according to an embodiment of the present application;
FIG. 2 is a flowchart of a time delay compensation method according to an embodiment of the present application;
FIG. 3 is a flowchart of exchanging time delay component data between an RRU and an interface module according to an embodiment of the present application;
FIG. 4 is a structural diagram of an RRU reporting self-detected delay component data according to an embodiment of the present application;
FIG. 5 is a structural diagram of configuring a ring network; and
FIG. 6 is a structural diagram of a ring network failure.

### DETAILED DESCRIPTION

Embodiments of the present application are described hereinafter in detail in conjunction with drawings. It is to be noted that if not in collision, embodiments of the present application and features therein may be combined with each other in any manner.

The steps illustrated in the flowcharts among the drawings may be performed by, for example, a computer system capable of executing a set of computer-executable instructions. Moreover, although logical sequences are illustrated in the flowcharts, the steps illustrated or described may be performed in sequences different from those described here in some cases.

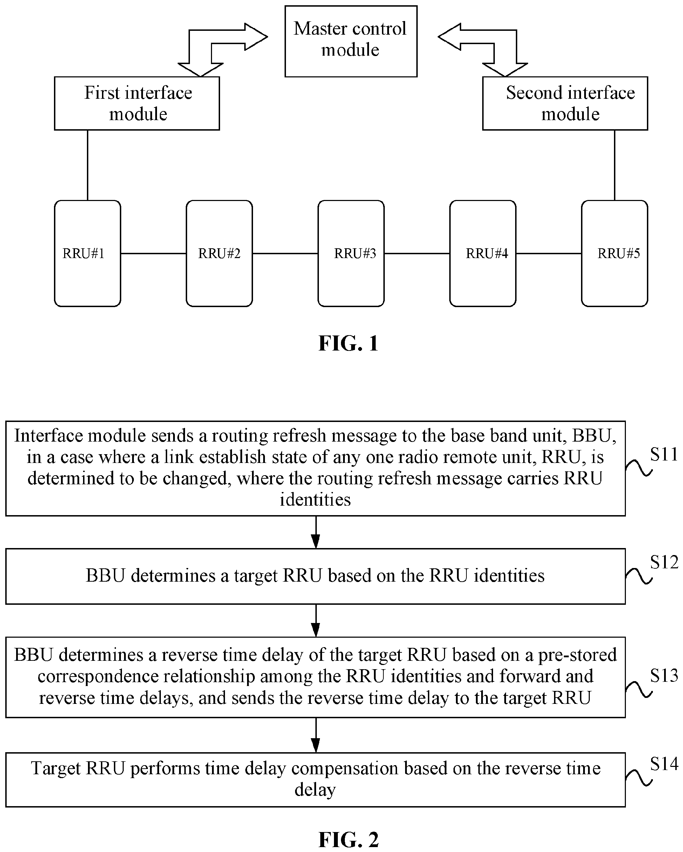

Firstly, the application networking system of the present application is briefly introduced. FIG. 1 is a structural diagram of a networking system according to an embodiment of the present application. As shown in FIG. 1, the networking system includes a first interface module, a second interface module, a master control module (e.g. BBU) and a plurality of RRUs. The plurality of RRUs are linked by an optical fiber and are interconnected between the first interface module and the second interface module, and each RRU is independent. The networking system is applied to the base station.

Each RRU maintains physical connection with two interface modules at the same moment to maintain the underlay data communication, and each RRU can only establish upper layer data communication with one interface module at the same moment. As the upper layer control unit of the two interface modules, the BBU respectively establishes the upper layer data communication with the two interface modules, and the two interface modules run independently.

It is to be noted that in this embodiment, the interface modules are optical interface modules.

In an embodiment, the present application provides a time delay compensation method. FIG. 2 is a flowchart of a time delay compensation method according to an embodiment of the present application. The method may be applicable to a case of fast self-healing in distributed ring networking. The method may be performed by the base station provided by the present application. As shown in FIG. 2, the time delay compensation method provided by the present application mainly includes S11 and S12.

In S 11, the interface module sends a routing refresh message to the BBU in a case where a link establish state of any one RRU is determined to be changed, where the routing refresh message carries RRU identities.

In S12, the BBU determines a target RRU based on the RRU identities.

In S13, the BBU determines a reverse time delay of the target RRU based on a pre-stored correspondence relationship among the RRU identities and forward and reverse time delays, and sends the reverse time delay to the target RRU.

In S14, the target RRU performs time delay compensation based on the reverse time delay.

In this embodiment, the target RRU can be understood as an RRU of which a link establish state has changed.

In an exemplary implementation manner, the correspondence relationship among the identities of the plurality of RRUs, the forward and reverse time delays are determined in the following manners.

The two interface modules calculate forward and reverse time delays of all RRUs based on the acquired forward and reverse time delay component data of an RRU in a primary state, and forward and reverse time delay component data of an RRU in a standby state.

The BBU receives and counts the forward and reverse time delays of all RRUs sent by the two interface modules, and establishes the correspondence relationship between the RRU identities and the forward and reverse time delays.

In an exemplary implementation manner, before the two interface modules acquires the forward and reverse time delay component data of the RRU in the primary state, and the forward and reverse delay component data of the RRU in the standby state, the method further includes the following.

The two interface modules acquire and store the time delay component data of all RRUs sent by the RRUs, respectively.

The two interface modules send the time delay component data of the RRU in the primary state to the BBU, respectively.

The BBU sends the time delay component data of the RRU in the primary state to an opposite terminal interface module base on the networking structure information.

The opposite terminal interface module receives and stores the time delay component data of the RRU in the primary state to determine the forward and reverse time delays of the RRU in the standby state identified by the opposite terminal interface module, where the two interface modules are mutually opposite terminal interface modules.

In an exemplary implementation manner, after the first interface module sends the routing refresh message to the BBU, the method further includes: switching, the BBU, an Internet Protocol, IP, connection based on the routing refresh message.

In an exemplary implementation manner, switching, the BBU, the IP connection based on the routing refresh message includes: updating, by the BBU, routing information of each RRU based on the RRU identities carried in the routing refresh message, sequentially; and updating, by the BBU, IP information of the two interface modules carried in the routing refresh message to an gateway IP between the BBU and the target RRU.

In an exemplary implementation manner, determining that the link establish state of any one RRU has changed includes: determining, by the two interface modules, that the link establish state of any one RRU has changed in response to detecting that a state of any one RRU changes from the standby state to the primary state.

In an exemplary implementation manner, before the two interface modules acquire the forward and reverse time delay component data of the RRU in the primary state and the forward and reverse delay component data of the RRU in the standby state, the method further includes: sending, by the BBU, networking structure information to the two interface modules, where the networking structure information includes ring networking identifier and all RRU identities; sending, by the two interface modules, the RRU identities corresponding to the RRUs to all RRUs through underlay common public radio interface (CPRI) communication data packets, respectively; selecting, by all RRUs, one interface module of the two interface modules to establish a upper layer communication link; inserting, by all RRUs, preset information into the underlay CPRI communication data packets of the two interface modules; and determining, by the two interface modules, link establish states of all RRUs based on the preset information in the underlay CPRI communication data packets.

In this embodiment, the BBU makes the networking structure information into two copies, and respectively sends two copies of the networking structure information to the first optical interface module and the second optical interface module which are connected to loop RRUs. The networking structure information includes the RRU ring networking identifier and all RRU identities in a loop.

After the two optical interface modules acquire the networking structure information, the networking mode is judged according to the ring networking identifier therein. When the ring networking is satisfied, the two optical interface modules take the optical port as the basic unit, sort out all RRU identities in the networking structure information, and record all RRUs as the "standby" state. Each optical interface module supports a plurality of optical ports, and each optical port is used as a basic unit to record all RRU identities under the each optical port.

The two optical interface modules send RRU identities to RRUs through the underlay CPRI communication data packets, respectively. When the underlay optical fiber physical link is unblocked, each RRU can normally acquire its own identity. When optical fiber physical links at both sides of each RRU are unblocked, each RRU can acquire two identities from two optical interface modules, successively.

When the RRUs first receive the underlay CPRI communication data packet sent by one optical interface module of the two optical interface modules, the RRUs preferentially select the one optical interface module to establish the upper layer communication link with the one optical interface module. For example, when the RRUs first receive the underlay CPRI communication data packet sent by the first optical interface module of the two optical interface modules, the RRUs preferentially select the first optical interface module to establish the upper layer communication link with the first optical interface module. When the RRUs first receive the underlay CPRI communication data packet sent by the second optical interface module of the two optical interface modules, the RRUs preferentially select the second optical interface module to establish the upper layer communication link with the second optical interface module.

In an exemplary implementation manner, inserting, by the RRUs, the preset information into the underlay CPRI communication data packets of the two interface modules includes: inserting, by the RRUs, an RRU identity sent by the selected interface module into each underlay CPRI communication data packet of the selected interface module, and inserting, by the RRUs, an idle value into the underlay CPRI communication data packet of an interface module which is not selected; and determining, by the two interface modules, the link establish states of the RRUs based on the preset information in the underlay CPRI communication data packets includes: marking, by each interface module, an RRU as the primary state corresponding to the inserted RRU identity in a case of detecting that the RRU identity is inserted into the underlay CPRI communication data packet, and marking, by each interface module, an RRU as the standby state according to the RRU identities in the networking structure information in a case of detecting that an idle value is inserted into the underlay CPRI communication data packet.

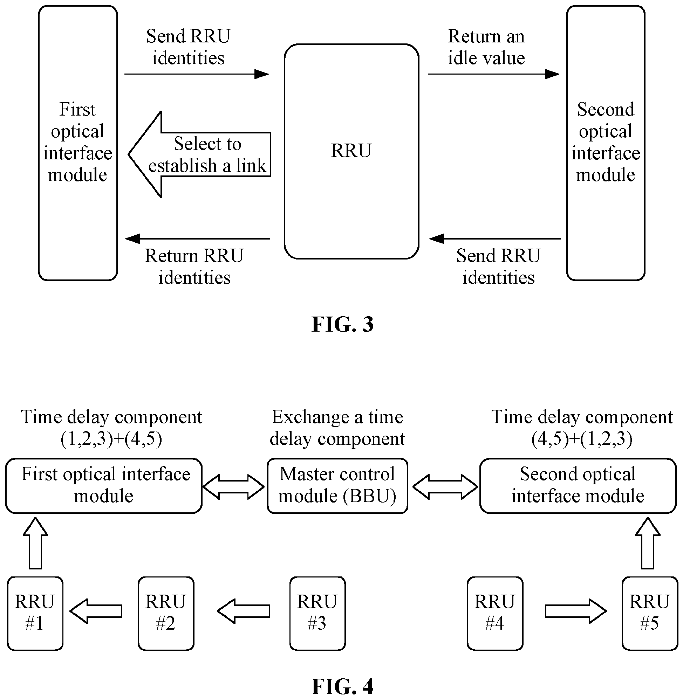

As shown in FIG. 3, when the RRUs select the first interface module to establish the upper layer communication link with the first interface module, the RRU identity sent by the first optical interface module is inserted into a designated field of each underlay CPRI communication data packet through the optical fiber physical link connected to the first optical interface module. For a second optical interface module which is not selected to establish the upper layer communication link, the RRUs insert the idle value into the designated field of each underlay CPRI communication data packet. For another example, when the RRUs select the second interface module to establish the upper layer communication link with the second interface module, the RRU identity sent by the second optical interface module is inserted into a designated field of each underlay CPRI communication data packet through the optical fiber physical link connected to the second optical interface module. For the first optical interface module which is not selected to establish the upper layer communication link, the RRUs insert the idle value into the designated field of each underlay CPRI communication data packet.

The two interface modules respectively detect in real time the designated fields that may be inserted into the valid "RRU identity" in the underlay CPRI communication data packets.

When the two interface modules detect that the valid RRU identity is inserted into the underlay CPRI communication data packets, the RRU identity is compared with the RRU identities in the networking structure information stored by the optical interface modules, and the RRU is confirmed and recorded as the "primary" state.

The two interface modules detects that the idle value is inserted into the underlay CPRI communication data packets, the RRU is confirmed and recorded as the "standby" state according to the RRU identities in the networking structure information.

In the present application, RRU1, RRU2, RRU3 and RRU4 establish the upper layer communication link with the first interface module, and RRU5 establishes the upper layer communication link with the second interface module as an example. In the process of establishing the upper layer communication link between RRU1, RRU2, RRU3 and RRU4 and the first interface module and establishing the upper layer communication link between RRU5 and the second interface module, the first interface module records RRU1, RRU2, RRU3 and RRU4 as primary and RRU5 as standby; and the second interface module records RRU5 as primary, and RRU1, RRU2, RRU3 and RRU4 as standby.

After the two interface modules detect that the link establish state of a certain RRU under a certain optical interface module of the two interface modules has changed, the two interface modules send the routing refresh message to the master control module, where the routing refresh message carries the identity identities of all RRUs linked with the optical interface module and the IP information of the optical interface module.

The BBU receives the routing refresh message, sequentially updates the routing information of each RRU according to the RRU identities carried in the routing refresh message, updates the IP information of the optical interface modules in the routing refresh message to the gateway IP between the master control module and the RRUs, and completes the IP link switchover.

For example, the first interface module receives the RRU identities returned by RRU1, RRU2, RRU3 and RRU4, and receives the idle value returned by RRU5. After comparing these identities with the identities in the networking structure configuration parameters stored by the routing refresh message, RRU1, RRU2, RRU3 and RRU4 are recorded as the "primary state", and the RRU of RRU5 maintains the "standby state".

Since the link establish states of RRU1, RRU2, RRU3, and RRU4 recorded by the first interface module have changed (the standby is changed to the primary), the first interface module sends the routing refresh message to the BBU, the routing refresh message carries the identities of all RRUs under the first interface module and the IP information of the first interface module.

The second interface module receives the RRU identity returned by the RRU5 and the idle values returned by the RRU1, RRU2, RRU3 and RRU4, records RRU5 as the "primary state", and maintains RRU1, RRU2, RRU3 and RRU4 as the "standby state". Subsequently, the second interface module sends the routing refresh message to the BBU.

The BBU receives the routing refresh message, refreshes the routing information of RRU1, RRU2, RRU3 and RRU4, updates the IP of the first interface module to the gateway IP, refreshes the routing information of RRU5 and updates the IP of the second interface module to the gateway IP. At this time, the first interface module establishes an IP-stratum communication link with RRU1, RRU2, RRU3 and RRU4, and the second interface module establishes an IP-stratum communication link with RRU5.

In an exemplary implementation manner, after the two interface modules determine the link establish state of the RRUs based on the preset information in the underlay CPRI communication data packets, the method further includes: calculating, by the two interface modules, the forward and reverse time delays of all RRUs based on the received forward and reverse time delay component data of the RRUs in the primary state and the forward and reverse time delay component data of the RRUs in the standby state, and receiving and counting, by the BBU, the forward and reverse time delays of all RRUs sent by the two interface modules, and establishing the correspondence relationship between the RRU identities and the forward and reverse time delays.

In an exemplary implementation manner, calculating, by the two interface modules, the forward and reverse time delays of all RRUs in the primary state based on the received forward and reverse time delay component data of the RRUs in the primary state and the forward and reverse time delay component data of the RRUs in the standby state includes: acquiring and storing, by the two interface modules, the time delay component data of all RRUs sent by the RRUs, sending, by the two interface modules, the time delay component data of the respective RRUs in the primary state to the BBU, sending, by the BBU, the time delay component data of the RRUs in the primary state of each interface module to the opposite terminal interface module based on the networking structure information, and receiving and storing, by the opposite terminal interface module, the time delay component data of the RRUs in the primary state, and determining the forward and reverse time delays of the RRUs in the standby state identified by the opposite terminal interface module.

As shown in FIG. 4, after it is confirmed that the upper layer communication link is established, each RRU reports the forward time delay component data and the reverse time delay component data detected by the each RRU to the optical interface module establishing the upper layer communication link and corresponding to the each RRU.

After the time delay component data reported by the RRUs is acquired, the optical interface modules complete local storage according to the RRU identities, and send the forward time delay component data and the reverse time delay component data reported by the RRUs to the BBU.

The BBU receives the RRU time delay component data reported by the optical interface module, searches the opposite optical interface module corresponding to the optical interface module according to the networking structure information, and forwards the time delay component data to the opposite optical interface module. The first interface module and the second interface module are mutually opposite interface modules.

After the optical interface module acquires the time delay component data forwarded by the BBU, if the RRU is judged to be in the "standby" state, the local storage is completed.

The optical interface module periodically calculates the RRU time delay on the link in the ring networking mode, the optical interface module only calculates the delay of the RRU recorded as the "primary" state, and calculates the forward and reverse time delays of the RRU at the same time.

At any moment, the optical interface module simultaneously has the forward and reverse time delay component data reported by the RRUs in the "primary" state stored locally and the forward and reverse time delay component data of the RRUs in the "standby" state forwarded by the master control module, which are used for calculating the forward and reverse time delays of all RRUs in the "primary" states.

The two optical interface modules respectively send the forward and reverse time delay results calculated by the two optical interface modules to the BBU. The BBU collects the forward and reverse time delays reported by two optical interface modules, integrates the forward and reverse time delays of all RRUs on the loop, and completes table storage.

The ring networking method of the present application can grasp the primary and standby link establish state of the RRUs on the loop in real time, and has the forward and reverse time delay data of any RRU on the whole loop at any time regardless of how the RRUs select the link-up direction. When fault causes RRU switching, the pre-calculated accurate time delays can be issued for use without waiting for the latest time delay detection results reported by the RRUs, which greatly reduces the service interruption time caused by fault switching.

In an application example, a time delay compensation method is provided. In this embodiment, the first optical interface module is an optical port board 1 and the second optical interface module is an optical port board 2.

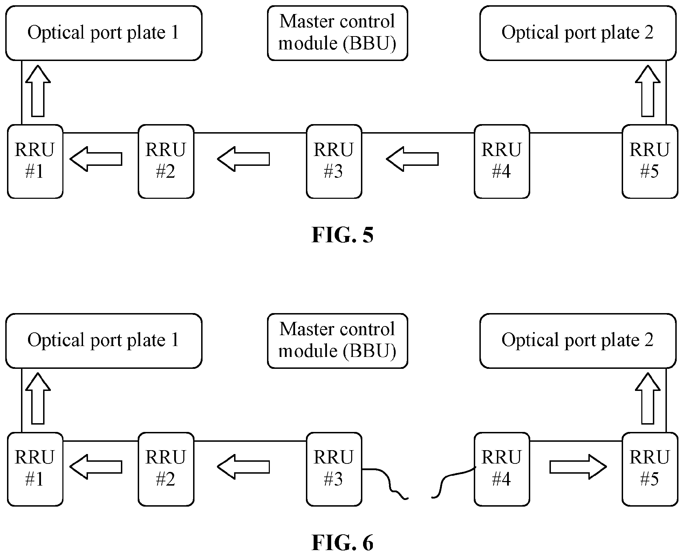

FIG. 5 is a structural diagram of configuring an annular network, and FIG. 6 is a structural diagram of an annular network failure. As shown in FIG. 5, a total of 5 RRUs are configured, and when RRUs initially establishes a link, the RRUs numbered 1 to 4 are selected to establish a link with optical port board 1, and an RRU numbered 5 are selected to establish a link with optical port board 2. As shown in FIG. 6, the fiber between RRUs numbered 3 and 4 is faulty, and an RRU numbered 4 is switched to optical port board 2 to establish a link.

After the BBU is powered on, the ring networking completes the whole procedure of issuing configuration data, selecting RRU link-up, switching an IP link, acquiring a time delay data table and switching fault, which mainly includes the following processing:
The BBU sends the networking structure information to the optical port board 1 and the optical port board 2 at the same time. In the networking structure information, an optical port referenced by the optical port board 1 is served as a root node of the ring network configuration, an optical port referenced by the optical port board 2 is served as a non-root node, and both the optical port board 1 and the optical port board 2 store the networking structure information. The networking structure information includes the ring networking identifier and all RRU identities.

When the optical port board 1 and the optical port board 2 judge that the ring networking identifier satisfies the ring networking, the optical port board 1 and the optical port board 2 take the optical port as the basic unit, sort out all RRU identities in the networking structure information, and record all RRUs as the "standby" state.

The optical port board 1 and the optical port board 2 respectively insert the RRU identities into the agreed position field of the underlay common public radio interface (CPRI). When the underlay optical fiber physical link is unblocked, each RRU can normally acquire its own identity. When optical fiber physical links on both sides of each RRU are unblocked, each RRU can acquire two identities, successively.

According to the scene in FIG. 5, RRUs numbered 1 to 4 first receive the identities sent from the optical port board 1, so that the RRUs numbered 1 to 4 return the identities received by themselves from the optical port board 1 to the optical port board 1, at the same time, the idle value is returned to the optical port board 2. The returned RRU identities also need to be inserted in the designated position of the underlay CPRI, and the RRU numbered 5 first receives the identity sent from the optical port board 2, so that the identity is returned to the optical port board 2, at the same time, the idle value is returned to the optical port board 1.

The optical port board 1 receives the identities returned by the RRUs numbered 1 to 4, and receives the idle value returned by the RRU numbered 5. After comparing these identities with the identities in the networking structure configuration parameters stored by the routing refresh message, the RRUs numbered 1 to 4 are recorded as the "primary state", and the RRU numbered 5 maintains the "standby state".

Since the link establish states of the RRUs numbered 1 to 4 recorded by the optical port board 1 have changed (the standby use changes to the primary use), the optical port board 1 sends the routing refresh message to the BBU, and the routing refresh message carries the identities of all RRUs in the primary state of the optical port board 1 and the IP information of the optical port board 1.

The optical port board 2 receives the identity returned by the RRU numbered 5 and the idle values returned by the RRUs numbered 1 to 4, records the RRU numbered 5 as the "primary state", and maintains other RRUs as a the "standby state". Subsequently, the optical port board 2 sends the routing refresh message to the BBU.

The BBU receives the routing refresh message, refreshes the routing information of the RRUs numbered 1 to 4, updates the IP of the optical port board 1 to the gateway IP, refreshes the routing information of the RRU numbered 5 and updates the IP of the optical port board 2 to the gateway IP. At this time, the optical port board 1 establishes an IP-stratum communication link with the RRUs numbered 1 to 4, and the optical port board 2 establishes an IP-stratum communication link with the RRU numbered 5.

All RRUs send their respective forward and reverse time delay component data to the corresponding optical port board through their respective IP communication links, and after the data is received and stored, the optical port boards report all time delay component data received by the optical port boards to the BBU, respectively.

The BBU receives the delay component data of the RRUs numbered 1 to 4, judges that the data comes from the optical port board 1, finds that the other side plate corresponding to the optical port board 1 connected to the RRUs is the optical port board 2 according to the configuration parameters of the networking structure, and forwards the time delay component data to the optical port board 2. Similarly, the time delay component data of the RRU numbered 5 is sent to the optical port board 1.

The optical port board needs to periodically calculate the forward and reverse time delay data of RRUs in the "primary state" of this optical port board. The forward time delay data refers to the time delay data between the RRUs and the root optical port, i.e. the time delay data between the RRUs and the optical port board 1. The reverse time delay data is time delay data between the RRUs and the optical port board 2. When the optical port board 1 calculates the reverse time delay data of the RRUs numbered 1 to 4, the optical port board 1 needs to use the reverse time delay component data reported by the RRU numbered 5 and forwarded by the BBU to accurately calculate. Similarly, when the optical port board 2 calculates the forward time delay data of RRU 5, the optical port board 2 needs to use the forward time delay component data of the RRUs numbered 1 to 4.

The optical port boards send the respective calculated time delay results to the BBU, so that the BBU grasps the forward and reverse time delays of all RRU to generates a time delay data table. When the fault occurs, the optical fiber between RRU3 and RRU4 is damaged, and the service is interrupted at this time.

RRU4 can only receive the identity from the optical port board 2, so that RRU4 starts to return the identity to the optical port board 2, and the RRUs numbered 1 to 3 maintain that the original link-up direction is unchanged.

The optical port board 2 finds that the RRU numbered 4 is turned from the "standby state" to the "primary state", reports the routing refresh message, and completes the IP link switchover.

The BBU detects that the RRU numbered 4 is switched, and starts to use the reverse time delay data of RRU4 in the time delay recording table to perform the time delay compensation, and the service recovers at this time.

The embodiment of the present application provides a fast self-healing distributed ring networking method, which greatly compresses the processing time consumed by fault recovery through the preprocessing manner of data exchange, and finally achieves the fast self-healing of networking.

In an embodiment, the present application provides a base station. As shown in FIG. 1, the base station provided by the present application includes two interface modules, a plurality of radio remote units RRU1, RRU2 ... RRUn, and a base band unit, BBU.

The two interface modules send a routing refresh message to the BBU in a case where a link establish state of any one RRU is determined to be changed, where the routing refresh message carries RRU identities.

The BBU determines a target RRU based on the RRU identities.

The BBU determines a reverse time delay of the target RRU based on a pre-stored correspondence relationship among the RRU identities and forward and reverse time delays, and sends the reverse time delay to the target RRU.

The target RRU performs time delay compensation based on the reverse time delay.

In an exemplary implementation manner, the plurality of RRUs are linked by an optical fiber.

In an exemplary implementation manner, the BBU, one interface module, the plurality of RRUs and the other interface module are sequentially connected to compose a ring networking structure. In an exemplary implementation manner, the correspondence relationship among the RRU identities, the forward and the reverse time delays is determined in the following manners: calculating, by two interface modules, forward and reverse time delays of all RRUs based on acquired forward and reverse time delay component data of RRUs in the primary state and acquired forward and reverse delay component data of RRUs in the standby state, and receiving and counting, by the BBU, the forward and reverse time delays of all RRUs sent by the two interface modules, and establishing the correspondence relationship among the RRU identities and the forward and reverse time delays.

In an exemplary implementation manner, before the two interface modules acquire the forward and reverse time delay component data of the RRUs in the primary state and the forward and reverse time delay component data of the RRUs in the standby state, the method further includes: acquiring and storing, by the two interface modules, the time delay component data of all RRUs sent by the RRUs, respectively, sending, by the two interface modules, the time delay component data of the RRUs in the primary state to the BBU, respectively, sending, by the BBU, the time delay component data of the RRUs in the primary state to the opposite terminal interface module based on the networking structure information, and receiving and storing, by the opposite terminal interface module, the time delay component data of the RRUs in the primary state, and determining the forward and reverse time delays of the RRUs in the standby state identified by the opposite terminal interface module. The two interface modules are mutually opposite interface modules.

In an exemplarily implementation manner, after the two interface module send the routing refresh message to the BBU, the method further includes: switching, by the BBU, an IP connection based on the routing refresh message.

In an exemplary implementation manner, switching, by the BBU, the IP connection based on the routing refresh message includes: updating, by the BBU, routing information of each RRU based on the RRU identities carried in the routing refresh message, sequentially; and updating, by the BBU, IP information pf the two interface modules carried in the routing refresh message to an gateway IP between the master control module and the target RRU.

In an exemplary implementation manner, determining that the link establish state of any one RRU has changed includes: determining, by the interface modules, that the link establish state of any one RRU has changed in response to detecting that a state of any one RRU changes from the standby state to the primary state.

In an exemplary implementation manner, before the two interface modules acquire the forward and reverse time delay component data of the RRU in the primary state and the forward and reverse delay component data of the RRU in the standby state, the method further includes: sending, by the BBU, networking structure information to the two interface modules, where the networking structure information includes ring networking identifier and all RRU identity identifiers; sending, by the two interface modules, the RRU identity identifiers corresponding to the RRUs to all RRUs through underlay CPRI communication data packets, respectively; selecting, by all RRUs, one interface module of the two interface modules to establish an upper layer communication link; inserting, by all RRUs, preset information into the underlay CPRI communication data packets of the two interface modules; and determining, by the two interface modules, link establish states of all RRUs based on the preset information in the underlay CPRI communication data packets.

In an exemplary implementation manner, inserting, by the RRUs, the preset information into the underlay CPRI communication data packets of the two interface modules includes: inserting, by the RRUs, an RRU identity sent by the selected interface module into each underlay CPRI communication data packet of the selected interface module, and inserting, by the RRUs, an idle value into the underlay CPRI communication data packet of an interface module which is not selected; and determining, by the two interface modules, the link establish states of the RRUs based on the preset information in the underlay CPRI communication data packets includes: marking, by the two interface module, an RRU as the primary state corresponding to the inserted RRU identity in a case of detecting that the RRU identity is inserted into the underlay CPRI communication data packet, and marking, by the two interface module, an RRU as the standby state according to the RRU identity identifiers in the networking structure information in a case where an idle value is detected to be inserted into the underlay CPRI communication data packet. Combined with the embodiment, it can be found that the networking manner of the present application can achieve rapid fault detection, and can complete service recovery without waiting for the latest time delay data report and time delay calculation result.

On the premise that the length of the physical optical fiber maintains unchanged, the networking manner of the present application acquires the time delay compensation data required for switching all fault points in advance, greatly reduces the service interruption time and simplifies the fault recovery procedure.

The detailed description of example embodiments of the present application has been provided above through exemplary and non-restrictive examples. However, considering the drawings and the claims, various modifications and adjustments to the preceding embodiments are apparent to those skilled in the art without deviating from the scope of the present application. Accordingly, the proper scope of the present application is determined according to the claims. In the time delay compensation method and the base station provided in the embodiments of the present application, the method includes: sending, by each interface module, a routing refresh message to the BBU in response to determining that a link establish state of any one RRU has changed, where the routing refresh message carries RRU identities; determining, by the BBU, a target RRU based on the RRU identities; determining, by the BBU, a reverse time delay of the target RRU based on a pre-stored time delay correspondence relationship, and sending, by the BBU, the reverse time delay to the target RRU; and performing, by the target RRU, time delay compensation based on the reverse time delay. When a communication fault occurs in one direction, the technical solution of the present application determines the reverse time delay in the other direction through the pre-stored time delay correspondence, and performs the reverse time delay compensation, thereby avoiding RRU re-establishment link, route re-refreshing, service parameter re-configuration and re-transmission and time delay re-measurement and re-reporting, etc. in the process of fault recovery, reducing the processing time consumed by fault recovery, and achieving rapid self-healing of networking.

## Claims

1. A time delay compensation method, applied to a base station, wherein the base station comprises a ring networking formed by a base band unit, BBU, two interface modules and a plurality of radio remote units, RRUs, and the method comprises:
sending, each interface module of the two interface modules, a routing refresh message to the BBU in response to determining that a link establish state of any one RRU of the plurality of RRUs has changed, wherein the routing refresh message carries identities of the plurality of RRUs;
determining, by the BBU, a target RRU based on the identities of the plurality of RRUs;
determining, by the BBU, reverse time delay of the target RRU based on a pre-stored correspondence relationship among the identities of the plurality of RRUs, forward time delays and reverse time delays, and sending, by the BBU, the reverse time delay to the target RRU; and
performing, by the target RRU, time delay compensation based on the reverse time delay.

2. The method of claim 1, wherein the correspondence relationship among the identities of the plurality of RRUs, the forward time delays and the reverse time delays is determined in the following manners:
calculating, by the two interface modules, a forward time delay and a reverse time delay of an RRU of the plurality of RRUs identified as a primary state based on acquired forward and reverse time delay component data of the RRU identified as the primary state and acquired forward and reverse delay component data of an RRU of the plurality of RRUs identified as a standby state, respectively; and
receiving, by the BBU, the forward time delay and the reverse time delay of the RRU identified as the primary state respectively sent by the two interface modules, counting a forward time delay and a reverse time delay of each RRU of the plurality of RRUs, and establishing the correspondence relationship among the identities of the plurality of RRUs, the forward time delays and the reverse time delays.

3. The method of claim 2, before acquiring, by the two interface modules, the forward and reverse time delay component data of the RRU identified as the primary state and the forward and reverse delay component data of the RRU of the plurality of RRUs identified as the standby state, respectively, further comprising:
acquiring and storing, by the two interface modules, the time delay component data of the RRU sent by the RRU identified as the primary state, respectively;
sending, by the two interface modules, the time delay component data of the RRU identified as the primary state to the BBU, respectively;
sending, by the BBU, time delay component data of an RRU of the plurality of RRUs in the primary state identified by a first interface module of the two interface modules to a second interface module of the two interface modules based on networking structure information, and sending, by the BBU, time delay component data of an RRU of the plurality of RRUs in the primary state identified by the second interface module to the first interface module; and
receiving and storing, by the second interface module, the time delay component data of the RRU in the primary state identified by the first interface module to determine a forward delay and a reverse delay of an RRU of the plurality of RRUs in the standby state identified by the second interface module, and receiving and storing, by the first interface module, time delay component data of the RRU in the primary state identified by the second interface module to determine a reverse delay and a forward delay of an RRU of the plurality of RRUs in the standby state identified by the first interface module.

4. The method of claim 1, after sending, by the each interface module of the two interface modules, the routing refresh message to the BBU, further comprising:
switching, by the BBU, an Internet Protocol, IP, connection between the two interface modules and the target RRU based on the routing refresh message.

5. The method of claim 4, wherein the switching, by the BBU, the IP connection between the two interface modules and the target RRU based on the routing refresh message, comprises:
updating, by the BBU, routing information of each RRU based on the identities of the plurality of RRUs carried in the routing refresh message, sequentially; and
updating, by the BBU, IP information of the two interface modules carried in the routing refresh message to a gateway IP between the BBU and the target RRU.

6. The method according to claim 1, wherein determining, by the each interface module of the two interface modules, that the link establish state of any one RRU of the plurality of RRUs has changed, comprises:
determining, by the each interface module, that the link establish state of any one RRU has changed in response to detecting that a state of any one RRU changes from a standby state to a primary state.

7. The method of claim 2, before acquiring, by the two interface modules, the forward and reverse time delay component data of the RRU of the plurality of RRUs identified as the primary state and the forward and reverse delay component data of the RRU of the plurality of RRUs identified as the standby state, respectively, further comprising:
sending, by the BBU, networking structure information to the two interface modules, respectively, wherein the networking structure information comprises a ring networking identifier and the identities of the plurality of RRUs;
sending, by two optical interface modules, corresponding identities of the plurality of RRUs to the plurality of RRUs through underlay common public radio interface, CPRI, communication data packets corresponding to the two interface modules, respectively;
selecting, by the plurality of RRUs, one interface module of the two interface modules to establish an upper layer communication link;
inserting, by the plurality of RRUs, preset information into the underlay CPRI communication data packets corresponding to the two interface modules; and
determining, by the two interface modules, link establish states of the plurality of RRUs based on the preset information in the s corresponding to the two interface modules.

8. The method of claim 7, wherein
the inserting, by the plurality of RRUs, the preset information into the underlay CPRI communication data packets corresponding to the two interface modules, comprises:
inserting, by each RRU of the plurality of RRUs, an identity of an RRU of the plurality of RRUs sent by a selected interface module of the two interface module into each underlay CPRI communication data packet corresponding to the interface module selected to establish the upper layer communication link, and inserting, by the each RRU, an idle value into a underlay CPRI communication data packet of an interface module of the two interface module which is not selected to establish the upper layer communication link;
the determining, by the two interface modules, the link establish states of the plurality of RRUs based on the preset information in the underlay CPRI communication data packets corresponding to the two interface modules, comprises:
in response to detecting that an identity of an RRU of the plurality of RRUs is inserted into a corresponding underlay CPRI communication data packet, marking, by the each interface module, the RRU corresponding to the inserted identity of the RRU as the primary state; and
in response to detecting that an idle value is inserted into the corresponding underlay CPRI communication data packet, marking, by the each interface module, a corresponding RRU of the plurality of RRUs as the standby state according to the identities of the plurality of RRUs in the networking structure information.

9. A base station, comprising two interface modules, a plurality of radio remote units, RRUs, and a base band unit, BBU; wherein
each interface module of the two interface modules, which is configured to send a routing refresh message to the BBU in response to determining that a link establish state of any one RRU of the plurality of RRUs has changed, wherein the routing refresh message carries identities of the plurality of RRUs;
the BBU is configured to determine a target RRU based on the identities of the plurality of RRUs;
the BBU is further configured to determine a reverse time delay of the target RRU based on a pre-stored correspondence relationship among the identities of the plurality of RRUs, forward time delays and reverse time delays, and send the reverse time delay to the target RRU; and
the target RRU is configured to perform time delay compensation based on the reverse time delay.

10. The base station of claim 9, wherein the BBU, one interface module of the two interface modules, the plurality of RRUs and another interface module of the two interface modules are sequentially connected to form a ring networking structure.
